# EUROPEAN PATENT SPECIFICATION

(11) **EP 1 188 368 B1**
(45) Date of publication and mention of the grant of the patent: **17.01.2007**
(21) Application number: 01203434.4
(22) Date of filing: 11.09.2001
(51) Int. Cl.: A01J 5/017

(54) **A construction for automatically milking animals**
Konstruktion zum automatischen Melken von Tieren
Dispositif de traite automatique d'animaux

(30) Priority: 15.09.2000 NL 1016196
(43) Date of publication of application: 20.03.2002
(73) Proprietor: Lely Enterprises AG, 6300 ZUG (CH)
(72) Inventor: Fransen, Renatus Ignatius Josephus, 3135 ZD Vlaardingen (NL); van den Berg, Karel, 2971 BR Bleskensgraaf (NL); van der Lely, Alexander, 3065 NA Rotterdam (NL)
(74) Representative: Corten, Maurice Jean F.M.

(56) References cited:
- EP-A- 0 635 203
- EP-A- 0 951 823
- FR-A- 2 298 943

## Description

The invention relates to a construction for automatically milking animals according to the preamble of claim 1.

Such a construction is known for instance from EP-A-0 635 203. The known constructions are rather cumbersome and restricted to the area where they are placed.

The invention aims at improving and further automatizing such a construction. According to the invention this is achieved by the measures mentioned in the characterizing part of claim 1. The milk collecting unit may serve as a master station for the mobile milking units. As a result thereof the milking units can be designed as light and compact ones. The own propulsion means of the milking units result in a multifunctional construction which can be used not only in a stable.

The invention will now be explained in further detail with reference to the accompanying figures.
Figure 1 is a schematic side view of a first embodiment of a milking unit according to the invention;
Figure 2 is a schematic side view of a further embodiment of the milking unit;
Figure 3 shows the milking unit of Figure 1 when it is being used, and
Figure 4 shows the milking unit of Figure 2 when it is being used.

The milk collecting unit may be designed in many different shapes and dimensions. Both mobile and stationary constructions are possible, their accessibility always being of importance for the milking units. Apart from the characteristics described hereinafter there are hardly restrictions for the construction of the milk collecting unit, which is not shown in further detail. The milk collecting unit is preferably provided with a milk reservoir, with energy supply means for the milking units, with underpressure and/or overpressure supply means for the milking units, with milk analysing means, with cleaning and/or disinfecting means for the milking units, in particular for the teat cups, and with equipment for controlling the milking units, such as a computer with appropriate communication means.

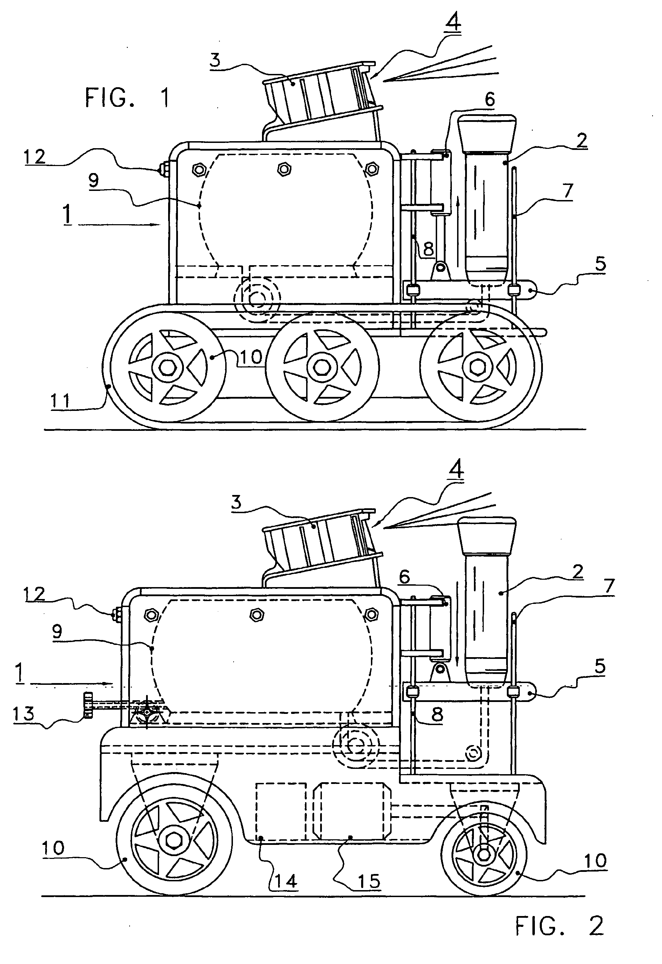

The milking unit 1 shown in Figure 1 is provided with one teat cup 2 and with the means for connecting the teat cup 2 to the teats of an animal to be milked. These means known per se comprise a laser sensor 4 disposed in a housing 3 for detecting the position of the teats of the animal to be milked relative to the teat cup 2, and further a lifting device for the teat cup 2, said lifting device comprising a platform 5, a cylinder 6 and guide elements 7 and 8. The construction is suitable for positioning the milking unit 1 on the basis of data from the laser sensor 4 in such a manner that the lifting device can connect the teat cup 2 to the teat of the animal to be milked by means of a substantially vertical movement.

In the depicted embodiment the milking unit 1 is provided with one teat cup 2. Of course, there may also be provided two or four teat cups. The milking unit 1 is further provided with a milk tank 9 which is connected to the teat cup 2 and which is suitable for being connected to the milk reservoir of the milk collecting unit, so that the milk tank 9 is able to supply regularly or when required the milk collected therein. The milking unit 1 is further provided with (non-shown) storage means for energy (such as an accumulator) and/or overpressure and/or underpressure. The milking unit 1 may also be provided with a camera (e.g. for navigation or positioning purposes).

The own propulsion means of the milking unit 1 comprise drive means, such as a motor, and steering means. The milking unit 1 is provided with wheels or rollers 10 and caterpillar tracks 11 and is suitable for moving across the ground in a rolling manner. There may also be provided an air cushion construction, so that the milking unit 1 can move across the ground in a hovering manner.

The construction preferably comprises navigation means (such as a computer with appropriate data) which are suitable for determining a course to be followed for the milking unit 1 and which are suitable for making the milking unit 1 follow a certain course with the aid of the propulsion means. The milk collecting unit and/or the milking unit 1 may be provided with means for locating an animal, said means being suitable for co-operating with positioning means (such as GPS or DGPS) provided near, on or in the animal. The milking unit 1 is further suitable for approaching and possibly following the animal on the basis of data from the means for locating an animal.

In a non-shown embodiment the milking unit 1 is provided with means for coupling at least a part of the milking unit 1, not being constituted by a teat cup 2, to an animal to be milked. Said means may comprise at least one gripping arm which is suitable for gripping the trunk and/or at least one leg of the animal. In this case the milking unit 1 is suitable for remaining connected with the animal during a possibly adjustable time interval after coupling. Said time interval may also depend on the duration of the milking process and/or the duration of the connection of the teat cup(s). The construction is suitable for activating the means for connecting the teat cup(s) 2 after coupling. When the milking unit 1 is designed as a light one, the means for coupling may be suitable for suspending the milking unit (1) as a whole from the animal to be milked.

In an embodiment of the invention the milking unit 1 is provided with lure means for an animal to be milked. In a further embodiment the construction (the milk collecting unit and/or the milking unit 1) is provided with means for summoning an animal to be milked. The milking unit 1 may also be provided with repelling means for keeping animals that are not to be milked for the time being at a distance.

The milking unit 1 is preferably provided with transmitting and/or receiving means for transmitting and/or receiving data to and/or from the milk collecting unit. The construction may be provided with transmitting and/or receiving means for transmitting and/or receiving data to and/or from an animal to be milked.

The milking unit 1 is provided with sensor means 12 for registering movements and/or displacements of the animal to be milked and is suitable for tracking the animal to be milked with the aid of data from the sensor means 12. When, as depicted, the milking unit 1 is not designed with gripping arms, the vehicle 1 can track the animal in this manner during milking, if necessary.

Figure 2 shows another embodiment of the milking unit 1. In this embodiment the wheels 10 are designed as swivelling wheels. The milk tank 9 is provided with a connecting piece 13 for the milk reservoir of the milk collecting unit. Further the accumulator 14 and the motor 15 are depicted.

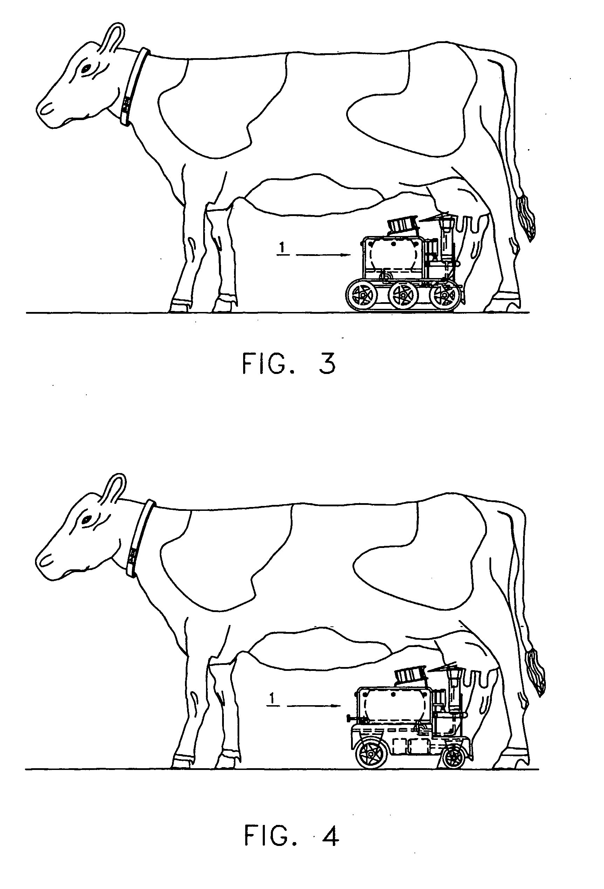

Figures 3 and 4 illustrate the above-described embodiments of the milking unit 1 in a situation in which they are being used. The unmanned vehicle 1 can be controlled by means of a computer in such a manner that it traces and possibly tracks a located animal to be milked, connects the teat cup(s) 2 after assuming the appropriate position relative to the udder of the animal and milks the animal. The milk is stored in the milk tank 9 which can be emptied, regularly or when it is (almost) filled completely, into the milk reservoir of the milk collecting unit. Also for cleaning, energy supply and the like the milking unit 1 can be served by the milk collecting unit. As a result thereof the milking units 1 can be designed as very light and compact ones.

## Claims

1. A construction for automatically milking animals, said construction being provided with a milking robot having at least one teat cup (2) and means (3 to 8) for connecting the teat cup(s) (2) to the teats of an animal to be milked, **characterized in that** the construction comprises at least one milk collecting unit and at least one milking unit (1) which is movable relative to the milk collecting unit and which is provided with own propulsion means (10, 11, 14, 15).

2. A construction as claimed in claim 1, **characterized in that** the milk collecting unit is provided with a milk reservoir.

3. A construction as claimed in claim 1 or 2, **characterized in that** the milk collecting unit is provided with energy supply means for the milking unit (1).

4. A construction as claimed in any one of claims 1 to 3, **characterized in that** the milk collecting unit is provided with underpressure and/or overpressure supply means for the milking unit (1).

5. A construction as claimed in any one of claims 1 to 4, **characterized in that** the milk collecting unit is provided with milk analysing means.

6. A construction as claimed in any one of claims 1 to 5, **characterized in that** the milk collecting unit is provided with cleaning and/or disinfecting means for the milking unit (1), in particular for one or a plurality of teat cups (2).

7. A construction as claimed in any one of claims 1 to 6, **characterized in that** the milk collecting unit is provided with equipment for controlling the milking unit (1), such as a computer with appropriate communication means.

8. A construction as claimed in any one of claims 1 to 7, **characterized in that** the milking unit (1) is provided with the at least one teat cup (2) and with the means (3 to 8) for connecting the teat cup(s) (2) to the teats of an animal to be milked.

9. A construction as claimed in any one of claims 1 to 8, **characterized in that** the milking unit (1) is provided with one teat cup (2).

10. A construction as claimed in any one of claims 1 to 9, **characterized in that** the milking unit (1) is provided with a milk tank (9) which is suitable for being connected to the milk reservoir of the milk collecting unit.

11. A construction as claimed in any one of claims 1 to 10, **characterized in that** the milking unit (1) is provided with storage means for energy (14) and/or overpressure and/or underpressure.

12. A construction as claimed in any one of claims 1 to 11, **characterized in that** the milking unit (1) is provided with a camera.

13. A construction as claimed in any one of claims 1 to 12, **characterized in that** the propulsion means (10, 11, 14, 15) comprise drive means (15).

14. A construction as claimed in any one of claims 1 to 13, **characterized in that** the propulsion means (10, 11, 14, 15) comprise steering means (10, 11).

15. A construction as claimed in any one of claims 1 to 14, **characterized in that** the construction is provided with navigation means.

16. A construction as claimed in claim 15, **characterized in that** the navigation means are suitable for determining a course to be followed for the milking unit (1).

17. A construction as claimed in claim 15 or 16, **characterized in that** the navigation means are suitable for making the milking unit (1) follow a certain course with the aid of the propulsion means (10, 11, 14, 15).

18. A construction as claimed in any one of claims 1 to 17, **characterized in that** the construction is provided with means for locating an animal.

19. A construction as claimed in claim 18, **characterized in that** the locating means are suitable for co-operating with positioning means provided near, on or in the animal.

20. A construction as claimed in claim 18 or 19, **characterized in that** the milking unit (1) is suitable for approaching and possibly tracking the animal on the basis of data from the means for locating an animal.

21. A construction as claimed in any one of claims 1 to 20, **characterized in that** the milking unit (1) is provided with means for coupling at least a part of the milking unit (1), not being constituted by a teat cup (2), to an animal to be milked.

22. A construction as claimed in claim 21, **characterized in that** the coupling means comprise at least one gripping arm.

23. A construction as claimed in claim 22, **characterized in that** the gripping arm is suitable for gripping the trunk and/or at least one leg of the animal.

24. A construction as claimed in any one of claims 21 to 23, **characterized in that** the milking unit (1) is suitable for remaining connected to the animal during a time interval after coupling.

25. A construction as claimed in claim 24, **characterized in that** the time interval is adjustable.

26. A construction as claimed in claim 24 or 25, **characterized in that** the time interval depends on the duration of the milking process and/or the duration of the connection of the teat cup(s) (2).

27. A construction as claimed in any one of claims 21 to 26, **characterized in that** the construction is suitable for activating the means for connecting the teat cup(s) (2) after coupling.

28. A construction as claimed in any one of claims 1 to 27, **characterized in that** the milking unit (1) is provided with wheels (10), rollers, caterpillar tracks (11) and/or an air cushion construction and is suitable for moving across the ground in a rolling and/or a hovering manner.

29. A construction as claimed in any one of claims 1 to 28, **characterized in that** the milking unit (1) is provided with a motor (15).

30. A construction as claimed in any one of claims 1 to 29, **characterized in that** the milking unit (1) is provided with lure means for an animal to be milked.

31. A construction as claimed in any one of claims 1 to 30, **characterized in that** the construction is provided with means for summoning an animal to be milked.

32. A construction as claimed in any one of claims 1 to 31, **characterized in that** the milking unit (1) is provided with repelling means for keeping animals that are not to be milked for the time being at a distance.

33. A construction as claimed in any one of claims 1 to 32, **characterized in that** the milking unit (1) is provided with transmitting and/or receiving means for transmitting and/or receiving data to and/or from the milk collecting unit.

34. A construction as claimed in any one of claims 1 to 33, **characterized in that** the construction is provided with transmitting and/or receiving means for transmitting data to and/or from an animal to be milked.

35. A construction as claimed in any one of claims 1 to 34, **characterized in that** the milking unit (1) is provided with sensor means (12) for registering movements and/or displacements of the animal to be milked.

36. A construction as claimed in claim 35, **characterized in that** the milking unit (1) is suitable for tracking the animal to be milked with the aid of data from the sensor means (12).

37. A construction as claimed in any one of claims 21 to 36, **characterized in that** the means for coupling are suitable for suspending the milking unit (1) as a whole from the animal to be milked.

## Patentansprüche

1. Konstruktion zum automatischen Melken von Tieren, wobei die Konstruktion mit einem Melkroboter versehen ist, der mindestens einen Zitzenbecher (2) sowie Vorrichtungen (3 bis 8) zum Anschließen des/der Zitzenbecher(s) (2) an die Zitzen eines zu melkenden Tieres aufweist,
**dadurch gekennzeichnet, daß** die Konstruktion mindestens eine Milchaufnahmeeinheit und mindestens eine Melkeinheit (1) umfaßt, die relativ zu der Milchaufnahmeeinheit beweglich und mit eigenen Fortbewegungsvorrichtungen (10, 11, 14, 15) versehen ist.

2. Konstruktion nach Anspruch 1,
**dadurch gekennzeichnet, daß** die Milchaufnahmeeinheit mit einem Milchbehälter versehen ist.

3. Konstruktion nach Anspruch 1 oder 2,
**dadurch gekennzeichnet, daß** die Milchaufnahmeeinheit mit einer Stromversorgungsvorrichtung für die Melkeinheit (1) versehen ist.

4. Konstruktion nach einem der Ansprüche 1 bis 3,
**dadurch gekennzeichnet, daß** die Milchaufnahmeeinheit mit Vorrichtungen zum Erzeugen von Unterdruck und/oder Überdruck in der Melkeinheit (1) versehen ist.

5. Konstruktion nach einem der Ansprüche 1 bis 4,
**dadurch gekennzeichnet, daß** die Milchaufnahmeeinheit mit Milchanalysiervorrichtungen versehen ist.

6. Konstruktion nach einem der Ansprüche 1 bis 5,
**dadurch gekennzeichnet, daß** die Milchaufnahmeeinheit mit Reinigungs- und/oder Desinfektionsvorrichtungen für die Melkeinheit (1), insbesondere für einen oder mehrere Zitzenbecher (2), versehen ist.

7. Konstruktion nach einem der Ansprüche 1 bis 6,
**dadurch gekennzeichnet, daß** die Milchaufnahmeeinheit mit einer Vorrichtung zum Steuern der Melkeinheit (1), wie z. B. einem Computer mit geeigneten Kommunikationsvorrichtungen, versehen ist.

8. Konstruktion nach einem der Ansprüche 1 bis 7,
**dadurch gekennzeichnet, daß** die Melkeinheit (1) mit dem mindestens einen Zitzenbecher (2) und mit den Vorrichtungen (3 bis 8) zum Anschließen des/der Zitzenbecher(s) (2) an die Zitzen eines zu melkenden Tieres versehen ist.

9. Konstruktion nach einem der Ansprüche 1 bis 8,
**dadurch gekennzeichnet, daß** die Melkeinheit (1) mit einem Zitzenbecher (2) versehen ist.

10. Konstruktion nach einem der Ansprüche 1 bis 9,
**dadurch gekennzeichnet, daß** die Melkeinheit (1) mit einem Milchtank (9) versehen ist, der an den Milchbehälter der Milchaufnahmeeinheit anschließbar ist.

11. Konstruktion nach einem der Ansprüche 1 bis 10,
**dadurch gekennzeichnet, daß** die Melkeinheit (1) mit Speichervorrichtungen für Energie (14) und/oder Überdruck und/oder Unterdruck versehen ist.

12. Konstruktion nach einem der Ansprüche 1 bis 11,
**dadurch gekennzeichnet, daß** die Melkeinheit (1) mit einer Kamera versehen ist.

13. Konstruktion nach einem der Ansprüche 1 bis 12,
**dadurch gekennzeichnet, daß** die Fortbewegungsvorrichtung (10, 11, 14, 15) eine Antriebsvorrichtung (15) umfaßt.

14. Konstruktion nach einem der Ansprüche 1 bis 13,
**dadurch gekennzeichnet, daß** die Fortbewegungsvorrichtung (10, 11, 14, 15) Steuervorrichtungen (10, 11) umfaßt.

15. Konstruktion nach einem der Ansprüche 1 bis 14,
**dadurch gekennzeichnet, daß** die Konstruktion mit einer Navigationsvorrichtung versehen ist.

16. Konstruktion nach Anspruch 15,
**dadurch gekennzeichnet, daß** die Navigationsvorrichtung geeignet ist, einen Kurs zu bestimmen, dem die Melkeinheit (1) zu folgen hat.

17. Konstruktion nach Anspruch 15 oder 16,
**dadurch gekennzeichnet, daß** die Navigationsvorrichtung bewirken kann, daß die Melkeinheit (1) mit Hilfe der Fortbewegungsvorrichtungen (10, 11, 14, 15) einem bestimmten Kurs folgt.

18. Konstruktion nach einem der Ansprüche 1 bis 17,
**dadurch gekennzeichnet, daß** die Konstruktion mit einer Vorrichtung zum Orten eines Tieres versehen ist.

19. Konstruktion nach Anspruch 18,
**dadurch gekennzeichnet, daß** die Vorrichtung zum Orten geeignet ist, mit Positioniervorrichtungen zusammenzuwirken, die nahe, auf oder in dem Tier angebracht sind.

20. Konstruktion nach Anspruch 18 oder 19,
**dadurch gekennzeichnet, daß** die Melkeinheit (1) geeignet ist, sich auf der Basis von Daten von der Vorrichtung zum Orten eines Tieres dem Tier zu nähern und ihm eventuell zu folgen.

21. Konstruktion nach einem der Ansprüche 1 bis 20,
**dadurch gekennzeichnet, daß** die Melkeinheit (1) mit einer Vorrichtung zum Ankoppeln zumindest eines Teiles der Melkeinheit (1), der nicht durch einen Zitzenbecher (2) gebildet ist, an ein zu melkendes Tier versehen ist.

22. Konstruktion nach Anspruch 21,
**dadurch gekennzeichnet, daß** die Ankopplungsvorrichtung mindestens einen Greifarm umfaßt.

23. Konstruktion nach Anspruch 22,
**dadurch gekennzeichnet, daß** der Greifarm geeignet ist, den Rumpf und/oder zumindest ein Bein des Tieres zu ergreifen.

24. Konstruktion nach einem der Ansprüche 21 bis 23,
**dadurch gekennzeichnet, daß** die Melkeinheit (1) geeignet ist, während eines Zeitraumes nach dem Ankoppeln an das Tier angeschlossen zu bleiben.

25. Konstruktion nach Anspruch 24,
**dadurch gekennzeichnet, daß** der Zeitraum einstellbar ist.

26. Konstruktion nach Anspruch 24 oder 25,
**dadurch gekennzeichnet, daß** der Zeitraum von der Dauer des Melkvorganges und/oder der Dauer des Anschließens des/der Zitzenbecher(s) (2) abhängt.

27. Konstruktion nach einem der Ansprüche 21 bis 26,
**dadurch gekennzeichnet, daß** die Konstruktion geeignet ist, die Vorrichtung zum Anschließen des/der Zitzenbecher(s) (2) nach dem Ankoppeln zu aktivieren.

28. Konstruktion nach einem der Ansprüche 1 bis 27,
**dadurch gekennzeichnet, daß** die Melkeinheit (1) mit Rädern (10), Rollen, Gleisketten (11) und/oder einer Luftkissenkonstruktion versehen und geeignet ist, sich rollend und/oder schwebend über den Boden zu bewegen.

29. Konstruktion nach einem der Ansprüche 1 bis 28,
**dadurch gekennzeichnet, daß** die Melkeinheit (1) mit einem Motor (15) versehen ist.

30. Konstruktion nach einem der Ansprüche 1 bis 29,
**dadurch gekennzeichnet, daß** die Melkeinheit (1) mit einer Lockvorrichtung für ein zu melkendes Tier versehen ist.

31. Konstruktion nach einem der Ansprüche 1 bis 30,
**dadurch gekennzeichnet, daß** die Konstruktion mit einer Vorrichtung zum Einbestellen eines zu melkenden Tieres versehen ist.

32. Konstruktion nach einem der Ansprüche 1 bis 31,
**dadurch gekennzeichnet, daß** die Melkeinheit (1) mit einer Zurückweisungsvorrichtung versehen ist, um Tiere, die zum gegenwärtigen Zeitpunkt nicht gemolken werden sollen, auf Abstand zu halten.

33. Konstruktion nach einem der Ansprüche 1 bis 32,
**dadurch gekennzeichnet, daß** die Melkeinheit (1) mit Sende- und/oder Empfangsvorrichtungen zum Senden von Daten an und/oder Empfangen von Daten von der Milchaufnahmeeinheit versehen ist.

34. Konstruktion nach einem der Ansprüche 1 bis 33,
**dadurch gekennzeichnet, daß** die Konstruktion mit Sende- und/oder Empfangsvorrichtungen zum Übermitteln von Daten zu und/oder von einem zu melkenden Tier versehen ist.

35. Konstruktion nach einem der Ansprüche 1 bis 34,
**dadurch gekennzeichnet, daß** die Melkeinheit (1) mit einer Sensorvorrichtung (12) zum Aufzeichnen von Bewegungen und/oder Verlagerungen des zu melkenden Tieres versehen ist.

36. Konstruktion nach Anspruch 35,
**dadurch gekennzeichnet, daß** die Melkeinheit (1) geeignet ist, dem zu melkenden Tier mit Hilfe von Daten von der Sensorvorrichtung (12) zu folgen.

37. Konstruktion nach einem der Ansprüche 21 bis 36,
**dadurch gekennzeichnet, daß** die Vorrichtung zum Ankoppeln geeignet ist, die Melkeinheit (1) als Ganzes an dem zu melkenden Tier aufzuhängen.

## Revendications

1. Dispositif de traite automatique d'animaux, ledit dispositif étant muni d'un robot de traite ayant au moins un gobelet trayeur (2) et des moyens (3 à 8) pour raccorder le ou les gobelets trayeurs (2) aux trayons d'un animal qui doit être trait, **caractérisé en ce que** le dispositif comprend au moins une unité de collecte de lait et au moins une unité de traite (1) qui est mobile par rapport à une unité de collecte de lait et qui est munie de ses propres moyens de propulsion (10, 11, 14, 15).

2. Dispositif selon la revendication 1, **caractérisé en ce que** l'unité de collecte de lait est munie d'un réservoir de lait.

3. Dispositif selon la revendication 1 ou 2, **caractérisé en ce que** l'unité de collecte de lait est munie d'un moyen d'alimentation en énergie pour l'unité de traite (1).

4. Dispositif selon l'une quelconque des revendications 1 à 3, **caractérisé en ce que** l'unité de collecte de lait est munie d'un moyen d'alimentation en sous-pression et/ou en surpression pour l'unité de traite (1).

5. Dispositif selon l'une quelconque des revendications 1 à 4, **caractérisé en ce que** l'unité de collecte de lait est munie d'un moyen d'analyse du lait.

6. Dispositif selon l'une quelconque des revendications 1 à 5, **caractérisé en ce que** l'unité de collecte de lait est munie de moyens de nettoyage et/ou désinfection pour l'unité de traite (1), en particulier pour un ou une pluralité de gobelets trayeurs (2).

7. Dispositif selon l'une quelconque des revendications 1 à 6, **caractérisé en ce que** l'unité de collecte de lait est munie d'un équipement pour commander l'unité de traite (1), tel qu'un ordinateur avec des moyens de communication appropriés.

8. Dispositif selon l'une quelconque des revendications 1 à 7, **caractérisé en ce que** l'unité de traite (1) est munie de l'au moins un gobelet trayeur (2) et des moyens (3 à 8) pour raccorder la ou les gobelets trayeurs (2) aux trayons d'un animal qui doit être trait.

9. Dispositif selon l'une quelconque des revendications 1 à 8, **caractérisé en ce que** l'unité de traite (1) est munie d'un gobelet trayeur (2).

10. Dispositif selon l'une quelconque des revendications 1 à 9, **caractérisé en ce que** l'unité de traite (1) est munie d'une citerne de lait (9) qui est adaptée pour être raccordée au réservoir de lait de l'unité de collecte de lait.

11. Dispositif selon l'une quelconque des revendications 1 à 10, **caractérisé en ce que** l'unité de traite (1) est munie d'un moyen de stockage d'énergie (14) et/ou de surpression et/ou de sous-pression.

12. Dispositif selon l'une quelconque des revendications 1 à 11, **caractérisé en ce que** l'unité de traite (1) est munie d'une caméra.

13. Dispositif selon l'une quelconque des revendications 1 à 12, **caractérisé en ce que** les moyens de propulsion (10, 11, 14, 15) comprennent un moyen d'entraînement (15).

14. Dispositif selon l'une quelconque des revendications 1 à 13, **caractérisé en ce que** les moyens de propulsion (10, 11, 14, 15) comprennent des moyens de guidage (10, 11).

15. Dispositif selon l'une quelconque des revendications 1 à 14, **caractérisé en ce que** le dispositif est muni de moyens de navigation.

16. Dispositif selon la revendication 15, **caractérisé en ce que** les moyens de navigation sont adaptés pour déterminer une trajectoire qui doit être suivie pour l'unité de traite (1).

17. Dispositif selon la revendication 15 ou 16, **caractérisé en ce que** les moyens de navigation sont adaptés pour amener l'unité de traite (1) à suivre une certaine trajectoire à l'aide des moyens de propulsion (10, 11, 14, 15).

18. Dispositif selon l'une quelconque des revendications 1 à 17, **caractérisé en ce que** le dispositif est muni de moyens pour localiser un animal.

19. Dispositif selon la revendication 18, **caractérisé en ce que** les moyens de localisation sont adaptés pour coopérer avec des moyens de positionnement fournis à proximité de, sur ou dans l'animal.

20. Dispositif selon la revendication 18 ou 19, **caractérisé en ce que** l'unité de traite (1) est adaptée pour s'approcher et éventuellement repérer l'animal sur la base des données issues des moyens pour localiser un animal.

21. Dispositif selon l'une quelconque des revendications 1 à 20, **caractérisé en ce que** l'unité de traite (1) est munie de moyens pour coupler au moins une partie de l'unité de traite (1), n'étant pas constituée par un gobelet trayeur (2), à un animal qui doit être trait.

22. Dispositif selon la revendication 21, **caractérisé en ce que** les moyens de couplage comprennent au moins un bras de saisie.

23. Dispositif selon la revendication 22, **caractérisé en ce que** le bras de saisie est adapté pour saisir le tronc et/ou au moins une patte de l'animal.

24. Dispositif selon l'une quelconque des revendications 21 à 23, **caractérisé en ce que** l'unité de traite (1) est adaptée pour rester raccordée à l'animal pendant un intervalle de temps après le couplage.

25. Dispositif selon la revendication 24, **caractérisé en ce que** l'intervalle de temps est réglable.

26. Dispositif selon la revendication 24 ou 25, **caractérisé en ce que** l'intervalle de temps dépend de la durée du procédé de traite et/ou de la durée du raccordement du ou des gobelets trayeurs (2).

27. Dispositif selon l'une quelconque des revendications 21 à 26, **caractérisé en ce que** le dispositif est adapté pour activer les moyens pour raccorder le ou les gobelets trayeurs (2) après le couplage.

28. Dispositif selon l'une quelconque des revendications 1 à 27, **caractérisé en ce que** l'unité de traite (1) est munie de roues (10), de rouleaux, de chenilles (11) et/ou d'un dispositif sur coussins d'air et est adaptée pour se déplacer sur le sol de manière roulante et/ou glissante.

29. Dispositif selon l'une quelconque des revendications 1 à 28, **caractérisé en ce que** l'unité de traite (1) est munie d'un moteur (15).

30. Dispositif selon l'une quelconque des revendications 1 à 29, **caractérisé en ce que** l'unité de traite (1) est munie de moyens de leurre pour un animal qui doit être trait.

31. Dispositif selon l'une quelconque des revendications 1 à 30, **caractérisé en ce que** le dispositif est muni de moyens pour faire venir un animal qui doit être trait.

32. Dispositif selon l'une quelconque des revendications 1 à 31, **caractérisé en ce que** l'unité de traite (1) est munie de moyens répulsifs pour maintenir à distance les animaux qui ne doivent pas être traits pour le moment.

33. Dispositif selon l'une quelconque des revendications 1 à 32, **caractérisé en ce que** l'unité de traite (1) est munie de moyens de transmission et/ou de réception pour transmettre et/ou recevoir des données vers et/ou depuis l'unité de collecte de lait.

34. Dispositif selon l'une quelconque des revendications 1 à 33, **caractérisé en ce que** le dispositif est muni de moyens de transmission et/ou de réception pour transmettre des données vers et/ou depuis un animal qui doit être trait.

35. Dispositif selon l'une quelconque des revendications 1 à 34, **caractérisé en ce que** l'unité de traite (1) est munie d'un moyen de capteur (12) pour enregistrer les mouvements et/ou les déplacements de l'animal qui doit être trait.

36. Dispositif selon la revendication 35, **caractérisé en ce que** l'unité de traite (1) est adaptée pour repérer l'animal qui doit être trait à l'aide des données issues du moyen de capteur (12).

37. Dispositif selon l'une quelconque des revendications 21 à 36, **caractérisé en ce que** les moyens pour le couplage sont adaptés pour suspendre l'unité de traite (1) comme un tout depuis l'animal qui doit être trait.
